# FASCICULE DE BREVET EUROPEEN

(11) **EP 2 956 336 B1**
(45) Date de publication et mention de la délivrance du brevet: **05.04.2017**
(21) Numéro de dépôt: 14709728.1
(22) Date de dépôt: 10.02.2014
(51) Int. Cl.: B60Q 1/50, B60S 1/58, B60Q 1/26, B60S 1/04

(54) **DISPOSITIF D'ESSUYAGE D'UNE VITRE ARRIÈRE DE VÉHICULE ET D'AFFICHAGE D'IMAGES D'ALERTE**
VORRICHTUNG ZUM WISCHEN DER HECKSCHEIBE EINES FAHRZEUGS UND ZUR ANZEIGE VON WARNBILDERN
DEVICE FOR WIPING THE REAR WINDOW OF A VEHICLE AND FOR DISPLAYING WARNING IMAGES

(30) Priorité: 12.02.2013 FR 1351156
(43) Date de publication de la demande: 23.12.2015
(73) Titulaire: Peugeot Citroën Automobiles SA, 78140 Vélizy Villacoublay (FR)
(72) Inventeur: LE DALL, Christophe, F-92150 Suresnes (FR); MILOHANIC, Daniel, F-91300 Massy (FR); JEUFFE, Gerard, F-78580 Bazemont (FR); GONCALVES, Whilk Marcelino, F-75013 Paris (FR)
(86) Numéro de dépôt international: PCT/FR2014/050243
(87) Numéro de publication internationale: WO 2014/125196

(56) Documents cités:
- EP-A2- 1 445 752
- DE-T2- 69 406 244
- GB-A- 2 270 587
- JP-A- H05 139 256
- US-A- 5 634 708
- US-A1- 2004 012 488
- US-A1- 2008 055 285

## Description

L'invention concerne les véhicules, éventuellement de type automobile, et plus précisément les dispositifs d'essuyage de vitre arrière que comprennent de tels véhicules.

Comme le sait l'homme de l'art, certains véhicules sont équipés, d'une part, d'un dispositif d'essuyage chargé d'essuyer et laver la face externe de leur vitre arrière, et, d'autre part, un système de détection destiné à estimer la distance qui les sépare d'un véhicule suivant et à générer une image d'alerte à destination du conducteur de ce dernier lorsque cette distance estimée est inférieure à un seuil, éventuellement variable en fonction de la vitesse.

Lorsque le système de détection décide de générer une image d'alerte, il arrive relativement fréquemment que la face externe de la vitre arrière soit sale ou embuée ou encore couverte d'humidité, ce qui induit une déformation plus ou moins importante de l'image d'alerte, de nature à empêcher le conducteur du véhicule suivant de comprendre sa signification. Dans certains cas, l'image d'alerte déformée peut même être confondue avec un feu de stop auxiliaire allumé, ce qui peut pousser le conducteur du véhicule suivant à freiner brusquement de façon inutile, ce qui peut s'avérer dangereux. Certes, dans les situations précitées le conducteur du véhicule équipé du système de détection peut activer le dispositif d'essuyage arrière qui est couplé à la vitre arrière et/ou le dispositif de désembuage de la vitre arrière. Mais, lorsqu'il est concentré sur la conduite de son véhicule, il n'a pas toujours conscience du fait que l'image d'alerte ne s'affiche pas correctement.

De tels systèmes sont notamment connus des documents EP1 445 752 A2 et US2008/055285 A1 et mettent en oeuvre un dispositif conforme au préambule de la revendication 1.

L'invention a donc notamment pour but d'améliorer la situation.

Elle propose notamment à cet effet un dispositif d'essuyage conforme à la partie caractérisante de la revendication 1.

Le dispositif d'essuyage selon l'invention peut comporter d'autres caractéristiques qui peuvent être prises séparément ou en combinaison, et notamment :
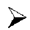 ses moyens de contrôle peuvent être agencés pour transmettre aux moyens d'affichage une instruction requérant l'affichage d'une image d'alerte lorsque la distance en cours séparant les premier et second véhicules est inférieure à un seuil ;
   - ses moyens d'affichage peuvent être agencés pour générer des images holographiques ;
   - ses moyens d'affichage peuvent être agencés pour générer des images dans la partie de la vitre arrière ;
   - ses moyens de contrôle peuvent être agencés pour contrôler l'alimentation électrique du mécanisme d'essuyage indépendamment de celle des moyens d'affichage, et réciproquement ;
   - il peut comprendre des moyens de fixation communs pour les moyens de contrôle, le mécanisme d'essuyage et les moyens d'affichage.

L'invention propose également un véhicule, éventuellement de type automobile, et comprenant une vitre arrière et un dispositif d'essuyage du type de celui présenté ci-avant et associé à sa vitre arrière.

D'autres caractéristiques et avantages de l'invention apparaîtront à l'examen de la description détaillée ci-après, et des dessins annexés, sur lesquels :
- la figure 1 illustre schématiquement, dans une vue en coupe longitudinale, un exemple de hayon (arrière) de véhicule automobile équipé d'un exemple de réalisation d'un dispositif d'essuyage selon l'invention, et
- la figure 2 illustre schématiquement, dans une vue de face (de l'intérieur du véhicule), l'exemple de hayon (arrière) de la figure 1 avec une matérialisation d'un exemple d'image d'alerte.

L'invention a pour but de proposer un dispositif d'essuyage D destiné à équiper une vitre arrière VR d'un véhicule.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout type de véhicule comprenant une vitre arrière pouvant être couplée à un dispositif d'essuyage.

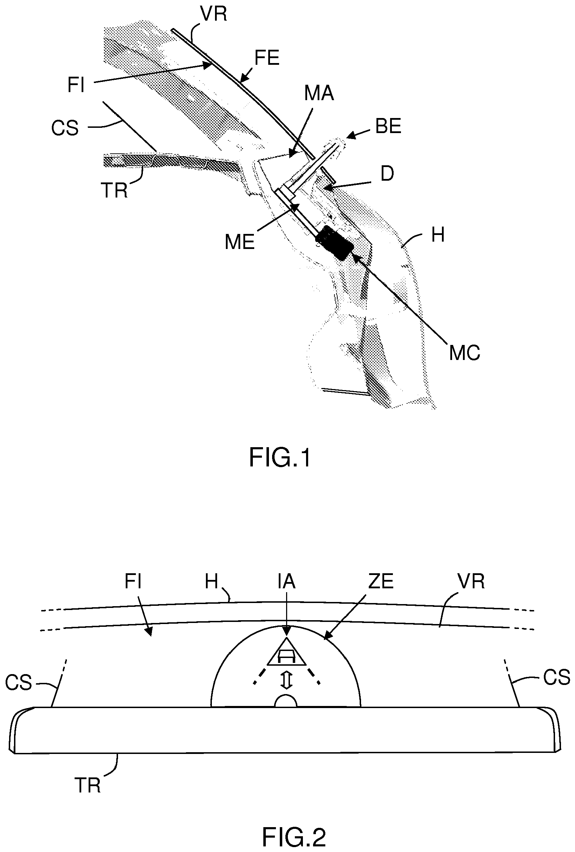

Par ailleurs, et comme illustré non limitativement sur les figures 1 et 2, on considère dans ce qui suit, à titre d'exemple non limitatif, que la vitre arrière VR fait partie d'un hayon (arrière) H de véhicule. Mais elle pourrait faire partie d'un autre type d'élément ouvrant situé à l'arrière d'un véhicule, comme par exemple un volet ou une porte, ou bien d'un élément non ouvrant situé à l'arrière d'un véhicule, comme par exemple une paroi.

On a schématiquement représenté sur la figure 1 une partie d'un exemple de hayon H de véhicule automobile. Dans cet exemple, le hayon H est couplé, via deux cordons de support CS, à une tablette arrière TR, destinée à délimiter une partie supérieure du coffre, de sorte que le redressement du hayon H provoque le redressement partiel de la tablette arrière TR.

Ce hayon arrière H est équipé d'une vitre arrière VR et d'un dispositif d'essuyage D selon l'invention.

Comme illustré, un dispositif d'essuyage D, selon l'invention, comprend un mécanisme ME, au moins un balai BE, des moyens de contrôle MC et des moyens d'affichage MA.

Le mécanisme ME est, ici, solidarisé au hayon au voisinage d'une face interne FI de la vitre arrière VR.

On entend ici par « face interne » une face FI qui est orientée vers l'intérieur du véhicule (ici vers l'habitacle), et par « face externe » une face FE qui est orientée vers l'extérieur du véhicule.

Ce mécanisme ME est agencé de manière à entraîner (ou déplacer) chaque balai BE. Il comprend à cet effet au moins un moteur électrique alimenté par le réseau d'alimentation électrique du véhicule (ci-après appelé « premier véhicule ») et entraînant ici en rotation un axe traversant la vitre arrière VR et à une extrémité duquel est solidarisé un balai BE. Ce mécanisme ME comprend également, généralement, des moyens d'aspersion (et notamment une pompe électrique) destinés à projeter un liquide de lavage sur la face externe FE de la vitre arrière VR.

Chaque balai BE est agencé, lorsqu'il est entraîné (ou déplacé) par le mécanisme ME, pour essuyer une partie (ou zone d'essuyage) ZE d'une face externe FE de la vitre arrière VR. On notera que dans l'exemple non limitatif illustré le dispositif d'essuyage D ne comprend qu'un unique balai BE. Mais il pourrait en comporter deux.

Les moyens de contrôle MC sont agencés de manière à contrôler non seulement le fonctionnement du mécanisme ME (et donc l'entraînement du balai BE), notamment en fonction d'instructions produites consécutivement à l'activation/désactivation de la fonction d'essuyage arrière par le conducteur du premier véhicule ou par un système de détection automatique, mais également le fonctionnement des moyens d'affichage MA, en fonction d'instructions qui sont produites par un système de détection embarqué dans le véhicule et sur lequel on reviendra plus loin.

On notera que les moyens de contrôle MC peuvent être éventuellement couplés à un système de détection de pluie.

Les moyens d'affichage MA sont couplés au mécanisme ME et au hayon H au voisinage de la face interne FI de la vitre arrière VR. Ils partagent ainsi des moyens de support et de fixation communs (éventuellement également avec les moyens de contrôle MC). Par ailleurs, ces moyens d'affichage MA sont propres à afficher au moins une image IA, dédiée au conducteur d'un second véhicule qui suit le premier véhicule, sur la face interne FI de la vitre arrière VR ou en aval de cette dernière VR, en fonction de commandes qui sont fournies par les moyens de contrôle MC.

On notera que la partie des moyens d'affichage MA par laquelle sort chaque image IA produite doit être placée dans une partie dégagée de la vitre arrière VR de sorte qu'elle puisse être visible par le conducteur du second véhicule.

Selon le type des images IA produites par les moyens d'affichage MA, elles sont affichées soit sur la face interne FI de la vitre arrière VR soit en aval de cette dernière VR (c'est-à-dire entre la vitre arrière VR et le second véhicule). Ainsi, des images bidimensionnelles (2D) ou tridimensionnelles (3D) seront affichées sur la face interne FI de la vitre arrière VR de préférence dans la partie ZE, tandis que des images holographiques seront affichées en aval de la vitre arrière VR, par exemple à deux ou trois mètres derrière le parechoc ou bouclier arrière du véhicule ou derrière la vitre arrière VR.

On notera que les images IA peuvent délivrer différents types de message selon l'application considérée et donc selon le système embarqué qui déclenche leur génération. Selon l'invention, les images délivrent des messages d'alerte destinés à alerter le conducteur du second véhicule d'un risque occasionné par la distance en cours qui sépare ce dernier du premier véhicule.

Cette distance en cours peut être estimée par un système de détection (non représenté) qui est embarqué dans le premier véhicule. Un tel système de détection peut, par exemple, comprendre des moyens d'analyse par voie d'ondes, comme par exemple au moins un détecteur radar, implanté dans la partie arrière du véhicule (par exemple dans le parechoc ou bouclier arrière).

Dans ce cas, chaque fois que le système de détection l'estime nécessaire, il produit une instruction d'alerte qui est transmise aux moyens de contrôle MC, par exemple via un réseau de communication, éventuellement de type multiplexé, qui est embarqué dans le véhicule. Par exemple, le système de détection peut produire une instruction d'alerte lorsque la distance en cours séparant les premier et second véhicules est inférieure à un seuil, qui varie de préférence en fonction de la vitesse et/ou de la distance inter véhicules.

Les moyens de contrôle MC sont alors agencés pour transmettre aux moyens d'affichage MA une instruction requérant l'affichage d'une image d'alerte IA (destinée à alerter le conducteur du second véhicule d'un risque occasionné par la distance en cours séparant ce dernier du premier véhicule), lorsqu'ils reçoivent une instruction d'alerte issue du système de détection.

Un exemple non limitatif d'image d'alerte IA est illustré schématiquement sur la figure 2. Un véhicule est ici symbolisé dans un triangle à bords rouges, avec une flèche à double sens matérialisant la distance séparant les premier et second véhicules. Bien entendu, d'autre types de message peuvent être affichés, et notamment des messages textuels (signalant par exemple la distance séparant les premier et second véhicules).

On notera également que, selon l'invention, les moyens de contrôle MC sont agencés, lorsqu'ils reçoivent une instruction d'alerte (par exemple du système de détection de distance), pour faire fonctionner le mécanisme ME pendant une durée choisie (suffisante pour essuyer la face externe FE de la vitre arrière VR) avant de transmettre aux moyens d'affichage MA une instruction requérant l'affichage d'une image IA. Cet essuyage peut éventuellement comporter une projection de liquide de lavage sur la face externe FE de la vitre arrière VR, en complément du travail réalisé par le balai BE dans la zone d'essuyage ZE. Cela permet de nettoyer la zone d'essuyage ZE de la face externe FE de la vitre arrière VR pour que l'image d'alerte IA puisse être affichée dans de bonnes conditions d'observation au travers de cette zone d'essuyage ZE ou dans cette zone d'essuyage ZE.

On notera que les moyens de contrôle MC peuvent être avantageusement agencés pour contrôler l'alimentation électrique du mécanisme ME indépendamment de celle des moyens d'affichage MA, et réciproquement.

On notera également que le contrôle des moyens d'affichage MA par les moyens de contrôle MC peut être assuré par des modules logiciels (ou « software ») et/ou des circuits électroniques (ou « hardware ») intégrés dans les moyens de contrôle MC.

L'invention offre plusieurs avantages, parmi lesquels :
- le contrôle de deux applications (essuyage et affichage) par des moyens de contrôle partagés (ou mutualisés), ce qui permet de réduire les coûts et l'encombrement,
- le partage (ou la mutualisation) des moyens de support et de fixation pour le mécanisme d'essuyage et les moyens d'affichage, ce qui permet également de réduire les coûts et l'encombrement,
- une alimentation électrique commune du mécanisme d'essuyage et des moyens d'affichage, ce qui permet également de réduire les coûts et l'encombrement,
- une possibilité d'essuyer automatiquement la vitre arrière avant l'affichage d'une image afin de limiter les situations dans lesquelles cette image ne s'affiche pas correctement.

## Revendications

1. Dispositif d'essuyage (D) pour une vitre arrière (VR) d'un premier véhicule, ledit dispositif (D) comprenant un mécanisme (ME), propre à entraîner au moins un balai (BE) agencé pour essuyer une partie (ZE) d'une face externe (FE) de ladite vitre arrière (VR), et des moyens de contrôle (MC) propres à contrôler le fonctionnement dudit mécanisme (ME), ledit dispositif comprenant en outre des moyens d'affichage (MA) couplés audit mécanisme (ME) et propres à afficher au moins une image, dédiée à un conducteur d'un second véhicule suivant ledit premier véhicule, sur une face interne (FI) de ladite vitre arrière (VR) ou en aval de cette dernière (VR) en fonction de commandes fournies par lesdits moyens de contrôle (MC) ; lesdits moyens de contrôle (MC) étant agencés pour transmettre auxdits moyens d'affichage (MA) une instruction requérant l'affichage d'une image, destinée à alerter ledit conducteur du second véhicule d'un risque occasionné par une distance en cours séparant ce dernier du premier véhicule, en cas de réception d'une instruction d'alerte produite par un système de détection embarqué dans ledit premier véhicule, **caractérisé en ce que** lesdits moyens de contrôle (MC) sont agencés, en cas de réception de ladite instruction d'alerte, pour faire fonctionner ledit mécanisme (ME) pendant une durée choisie avant de transmettre auxdits moyens d'affichage (MA) une instruction requérant l'affichage d'une image.

2. Dispositif selon la revendication 1, **caractérisé en ce que** lesdits moyens de contrôle (MC) sont agencés pour transmettre auxdits moyens d'affichage (MA) ladite instruction requérant l'affichage d'une image d'alerte lorsque ladite distance en cours séparant lesdits premier et second véhicules est inférieure à un seuil.

3. Dispositif selon l'une des revendications 1 ou 2, **caractérisé en ce que** lesdits moyens d'affichage (MA) sont agencés pour générer des images holographiques.

4. Dispositif selon l'une des revendications 1 à 3, **caractérisé en ce que** lesdits moyens d'affichage (MA) sont agencés pour générer des images dans ladite partie (ZE) de ladite vitre arrière (VR).

5. Dispositif selon l'une des revendications 1 à 4, **caractérisé en ce que** lesdits moyens de contrôle (MC) sont agencés pour contrôler l'alimentation électrique dudit mécanisme (ME) indépendamment de celle desdits moyens d'affichage (MA), et réciproquement.

6. Dispositif selon l'une des revendications 1 à 5, **caractérisé en ce qu'**il comprend des moyens de fixation communs pour lesdits moyens de contrôle (MC), ledit mécanisme (ME) et lesdits moyens d'affichage (MA).

7. Véhicule comprenant une vitre arrière (VR), **caractérisé en ce qu'**il comprend en outre un dispositif d'essuyage (D) selon l'une des revendications précédentes et associé à ladite vitre arrière (VR).

8. Véhicule selon la revendication 7, **caractérisé en ce qu'**il est de type automobile.

## Patentansprüche

1. Wischvorrichtung (D) für eine Heckscheibe (VR) eines ersten Fahrzeugs, wobei die Vorrichtung (D) einen Mechanismus (ME) umfasst, der geeignet ist, um mindestens ein Scheibenwischerblatt (BE) anzutreiben, das eingerichtet ist, um einen Teil (ZE) einer Außenseite (FE) der Heckscheibe (VR) abzuwischen, und Steuermittel (MC), die geeignet sind, um das Funktionieren des Mechanismus (ME) zu steuern, wobei die Vorrichtung außerdem Anzeigemittel (MA) umfasst, die mit dem Mechanismus (ME) gekoppelt und geeignet sind, um mindestens ein Bild, das einem Fahrer eines zweiten Fahrzeugs, das dem ersten Fahrzeug folgt, gewidmet ist, auf einer Innenseite (FI) der Heckscheibe (VR) oder stromabwärts dieser Letzteren (VR) in Abhängigkeit von Befehlen anzuzeigen, die von den Steuermitteln (MC) geliefert werden, wobei die Steuermittel (MC) eingerichtet sind, um den Anzeigemitteln (MA) eine Anweisung zu übertragen, die das Anzeigen eines Bilds fordert, das dazu bestimmt ist, den Fahrer des zweiten Fahrzeugs über eine Gefahr zu warnen, die durch eine aktuelle Entfernung die dieses Letztere von dem ersten Fahrzeug trennt, verursacht wird, wenn eine Warnanweisung empfangen wird, die von einem in dem ersten Fahrzeug mitgeführten Erfassungssystem erzeugt wird, **dadurch gekennzeichnet, dass** die Steuermittel (MC) eingerichtet sind, um im Fall des Empfangs der Warnanweisung den Mechanismus (ME) während einer ausgewählten Dauer funktionieren zu lassen, bevor an die Anzeigemittel (MA) eine Anweisung, die das Anzeigen eines Bilds fordert, übertragen wird.

2. Vorrichtung nach Anspruch 1, **dadurch gekennzeichnet, dass** die Steuermittel (MC) eingerichtet sind, um den Anzeigemitteln (MA) die Anweisung, die das Anzeigen eines Warnbilds fordert, zu übertragen, wenn die aktuelle Entfernung, die das erste und das zweite Fahrzeug trennt, kleiner ist als ein Schwellenwert.

3. Vorrichtung nach einem der Ansprüche 1 oder 2, **dadurch gekennzeichnet, dass** die Anzeigemittel (MA) eingerichtet sind, um holographische Bilder zu erzeugen.

4. Vorrichtung nach einem der Ansprüche 1 bis 3, **dadurch gekennzeichnet, dass** die Anzeigemittel (MA) eingerichtet sind, um Bilder in dem Teil (ZE) der Heckscheibe (VR) zu erzeugen.

5. Vorrichtung nach einem der Ansprüche 1 bis 4, **dadurch gekennzeichnet, dass** die Steuermittel (MC) eingerichtet sind, um die Stromversorgung des Mechanismus (ME) unabhängig von den Anzeigemitteln (MA) zu steuern und umgekehrt.

6. Vorrichtung nach einem der Ansprüche 1 bis 5, **dadurch gekennzeichnet, dass** sie gemeinsame Befestigungsmittel für die Steuermittel (MC), den Mechanismus (ME) und die Anzeigemittel (MA) umfasst.

7. Fahrzeug, das eine Heckscheibe (VR) umfasst, **dadurch gekennzeichnet, dass** es außerdem eine Wischvorrichtung (D) nach einem der vorhergehenden Ansprüche und die zu der Heckscheibe (VR) gehört, umfasst.

8. Fahrzeug nach Anspruch 7, **dadurch gekennzeichnet, dass** es des Typs Kraftfahrzeug ist.

## Claims

1. A device (D) for wiping the rear window (VR) of a first vehicle, said device (D) including a mechanism (ME) suitable for driving at least one blade (BE) arranged to wipe a portion (ZE) of an external face (FE) of said rear window (VR), and control means (MC) suitable for controlling the operation of said mechanism (ME), said device furthermore including display means (MA) coupled to said mechanism (ME) and suitable for displaying at least one image, intended for a driver of a second vehicle following said first vehicle, on an internal face (FI) of said rear window (VR) or downstream of said latter (VR) as a function of commands supplied by said control means (MC); said control means (MC) being arranged to transmit to said display means (MA) an instruction requiring the display of an image, intended to alert said driver of the second vehicle of a danger caused by a current distance separating the latter from the first vehicle, in the case of reception of a warning instruction produced by an on-board detection system in said first vehicle, **characterized in that** said control means (MC) are arranged, in the case of reception of said warning instruction, to cause said mechanism (ME) to operate for a selected duration before transmitting to said display means (MA) an instruction requiring the display of an image.

2. The device according to claim 1, **characterized in that** said control means (MC) are arranged to transmit to said display means (MA) said instruction requiring the display of a warning image when said current distance separating said first and second vehicles is less than a threshold.

3. The device according to one of claims 1 or 2, **characterized in that** said display means (MA) are arranged to generate holographic images.

4. The device according to one of claims 1 to 3, **characterized in that** said display means (MA) are arranged to generate images in said portion (ZE) of said rear window (VR).

5. The device according to one of claims 1 to 4, **characterized in that** said control means (MC) are arranged to control the electrical supply of said mechanism (ME) independently of that of said display means (MA), and vice versa.

6. The device according to one of claims 1 to 5, **characterized in that** it includes common fixing means for said control means (MC), said mechanism (ME) and said display means (MA).

7. A vehicle including a rear window (VR), **characterized in that** it includes furthermore a wiping device (D) according to one of the preceding claims and associated with said rear window (VR).

8. The vehicle according to claim 7, **characterized in that** it is of the automobile type.
